(19) Europäisches Patentamt
European Patent Office
Office européen des brevets

(11) Veröffentlichungsnummer: **0 355 447 B1**

(12) EUROPÄISCHE PATENTSCHRIFT

(45) Veröffentlichungstag der Patentschrift: **16.06.93**

(51) Int. Cl.⁵: **C08F 10/06**, C08F 4/643

(21) Anmeldenummer: **89113743.2**

(22) Anmeldetag: **25.07.89**

Die Akte enthält technische Angaben, die nach dem Eingang der Anmeldung eingereicht wurden und die nicht in dieser Patentschrift enthalten sind.

# (54) Propylen-Isoblockpolymer und Verfahren zu seiner Herstellung.

(30) Priorität: **30.07.88 DE 3826074**

(43) Veröffentlichungstag der Anmeldung:
**28.02.90 Patentblatt 90/09**

(45) Bekanntmachung des Hinweises auf die Patenterteilung:
**16.06.93 Patentblatt 93/24**

(84) Benannte Vertragsstaaten:
**BE DE ES FR GB IT NL**

(56) Entgegenhaltungen:
**EP-A- 0 269 986**
**EP-A- 0 302 424**
**EP-A- 0 344 887**

(73) Patentinhaber: **HOECHST AKTIENGESELLSCHAFT**
**Postfach 80 03 20**
**W-6230 Frankfurt am Main 80(DE)**

(72) Erfinder: **Dolle, Volker, Dr.**
**Hattersheimer Strasse 15**
**W-6233 Kelkheim Taunus(DE)**
Erfinder: **Rohrmann, Jürgen, Dr.**
**Die Ritterwiesen 10**
**W-6237 Liederbach(DE)**
Erfinder: **Winter, Andreas, Dr.**
**Gundelhardtstrasse 2**
**W-6233 Kelkheim Taunus(DE)**
Erfinder: **Antberg, Martin, Dr.**
**Sachsenring 30**
**W-6238 Hofheim am Taunus(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.6/3.3.1)

## Beschreibung

Die Erfindung bezieht sich auf ein Propylen-Isoblockpolymer bestehend aus langen isotaktischen Sequenzen und statistisch verteilten Ethyleneinheiten und ein Verfahren zu seiner Herstellung.

Es ist bekannt, daß Polypropylen in verschiedenen Strukturisomeren existiert:

(a) Hochisotaktisches Polypropylen, in dessen Molekülketten fast alle tertiären C-Atome die gleiche Konfiguration aufweisen,

(b) isotaktisches Stereoblock-PP, in dessen Molekülketten isotaktische Blöcke entgegengesetzter Konfiguration regelmäßig miteinander abwechseln,

(c) syndiotaktisches Polypropylen, in dessen Molekülketten jedes zweite tertiäre C-Atom die gleiche Konfiguration besitzt,

(d) ataktisches Polypropylen, in dessen Molekülketten die tertiären C-Atome eine regellose Konfiguration aufweisen

und

(e) ataktisch-isotaktisches Stereoblock-PP, in dessen Molekülketten isotaktische und ataktische Blöcke miteinander abwechseln.

Es ist ein Verfahren zur Herstellung von isotaktischen Stereoblockpolymeren bekannt, bei welchem Propylen mit Hilfe eines Metallocens eines Metalls der Gruppe IVb, Vb oder VIb des Periodensystems polymerisiert wird (vgl. US-PS 4,522,982). Dieses Metallocen ist eine Mono-, Di- oder Tricyclopentadienyl- oder substituierte Cyclopentadienyl-Metallverbindung, insbesondere des Titans. Als Cokatalysator dient ein Aluminoxan.

Allerdings sind die bevorzugt verwendeten Titanocene in verdünnter Lösung nicht ausreichend thermisch stabil, um in einem technischen Verfahren verwendbar zu sein. Außerdem werden bei diesem Verfahren Produkte mit größerer Länge der isotaktischen Sequenzen (n größer 6) nur bei sehr tiefer Temperatur (-60 °C) erhalten. Schließlich müssen die Cokatalysatoren in vergleichsweise hoher Konzentration eingesetzt werden, um eine ausreichende Kontaktausbeute zu erreichen, was dazu führt, daß die im Polymerprodukt enthaltenen Katalysatorreste in einem separaten Reinigungsschritt entfernt werden müssen.

Ferner ist bekannt, daß man Stereoblockpolymere von 1-Olefinen mit langen isotaktischen Sequenzen bei technisch günstigen Polymerisationstemperaturen mittels eines Katalysators erhalten kann, welcher aus einer Metallocenverbindung mit durch chirale Gruppen substituierten Cyclopentadienylresten und einem Aluminoxan besteht (vgl. EP-A 269 987).

Weiterhin ist bekannt, daß Stereoblockpolymere von 1-Olefinen mit breiter uni- oder multimodaler Molmassenverteilung erhalten werden können, wenn für die Polymerisation der 1-Olefine ein Katalysator verwendet wird, welcher aus einem Brücken enthaltenden chiralen Metallocen und einem Aluminoxan besteht (vgl. EP-A 269986). Die Polymeren eignen sich besonders gut für die Herstellung transparenter Folien.

Auch ist bekannt, daß beim Einsatz eines Katalysators auf der Basis von Biscyclopentadienylverbindungen des Zirkons und einem Aluminoxan beim polymerisieren von Propylen nur ataktisches Polymer erhalten wird (vgl. EP-A 69 951).

Schließlich kann mittels löslicher stereorigider chiraler Zirkonverbindungen hochisotaktisches Polypropylen hergestellt werden (vgl. EP-A 185 918). Insbesondere ist bekannt, daß isotaktische 1-Olefinpolymere erhalten werden können, wenn für die Polymerisation der 1-Olefine stereorigide chirale Zirkonverbindungen, die nur eingliedrige Brückeneinheiten enthalten und ein Aluminoxan verwendet werden (vgl. EP-A 302 424, EP-A 344 887).

Es wurde ein Polymerisationsverfahren gefunden, bei welchem ein Polymer mit regelmäßigem Molekülaufbau mit hoher Molmasse bei technisch günstigen Prozeßtemperaturen in hoher Ausbeute erhalten wird.

Die Erfindung betrifft somit ein Isoblockpolymer des Propylens mit Molekülketten, bestehend aus isotaktischen Sequenzen mit einer Sequenzlänge von 3 bis 50 Monomereinheiten, welche durch jeweils eine Monomereinheit mit entgegengesetzter Konfiguration voneinander getrennt sind, und 0,5 bis 10 mol-%, bezogen auf das Gesamtpolymer, statistisch verteilten Ethyleneinheiten.

Weiterhin betrifft die Erfindung ein Verfahren zur Herstellung des vorgenannten Isoblockpolymeren durch Polymerisation von Propylen bei einer Temperatur von -60 bis 100 °C, einem Druck von 0,5 bis 100 bar, in Lösung, in Suspension oder in der Gasphase, in Gegenwart eines Katalysators, welcher aus einem Metallocen und einem Aluminoxan besteht, das als Metallocen Bis-indenyl-bis-dimethylsilylhafniumdichlorid oder Bis-indenyl-bis-dimethylsilyl-zirkon-dichlorid verwendet.

Das erfindungsgemäße Isoblockpolymer ist ein Propylenpolymer.

Die Molekülketten dieses Polymers bestehend aus isotaktischen Sequenzen, welche durch jeweils eine Monomereinheit mit entgegengesetzter Konfiguration voneinander getrennt sind. Die Länge der isotaktischen Sequenzen beträgt 3 bis 50 Monomereinheiten. Gleichzeitig enthalten die Molekülketten statistisch verteilt Ethyleneinheiten, welche sich vorzugsweise in den isotaktischen Sequenzen befinden und durch Umlagerung von Propylen während der Polymerisation entstanden sind. Die Ethyleneinheiten können durch $^{13}C$-NMR-Spektroskopie nachgewiesen werden (vgl. Soga et al. Makrom.Chem. Rap. Comm. 8, 305-310 (1987)). Ihre Menge beträgt 0,5 bis 10, vorzugsweise 3 bis 5 mol-%, bezogen auf das Gesamtpolymer.

Infolge dieses sterischen Aufbaus sind die erfindungsgemäßen Isoblockpolymeren je nach Molmasse und isotaktischer Sequenzlänge amorph oder teilkristallin. In Abhängigkeit von der Kristallinität werden die Polymeren als körnige Pulver oder als kompakte Massen erhalten. Die teilkristallinen Isoblockpolymeren weisen im Vergleich zu isotaktischen Polymeren einen niedrigeren Schmelzpunkt auf. Isoblockpolymere besitzen kautschukartige Eigenschaften.

Der für das erfindungsgemäße Verfahren zu verwendende Katalysator besteht aus einer Metallocenverbindung und einem Aluminoxan.

Die vorstehend beschriebenen Metallocene können nach folgendem Reaktionsschema hergestellt werden:

$$H_2R^a + ButylLi \rightarrow HR^aLi$$

$$+ \quad X - R^c - X \rightarrow HR^a - R^c - R^bH$$

$$H_2R^b + ButylLi \rightarrow HR^bLi$$

(X = Cl, Br, J, O-Tosyl, $HR^a$ = 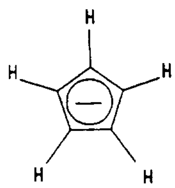 , $HR^b$ = 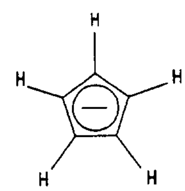 )

$$HR^a - R^c - R^bH + 2\ ButylLi \rightarrow LiR^a - R^c - R^bLi$$

$LiR^a - R^c - R^bLi$

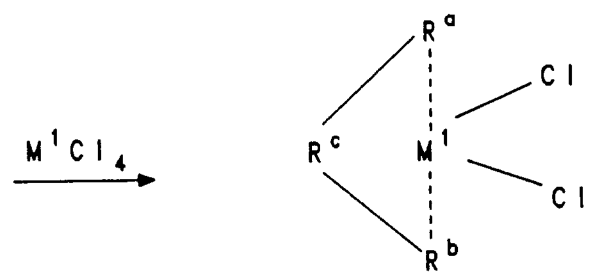


($M^1$ = Zirkon oder Hafnium).

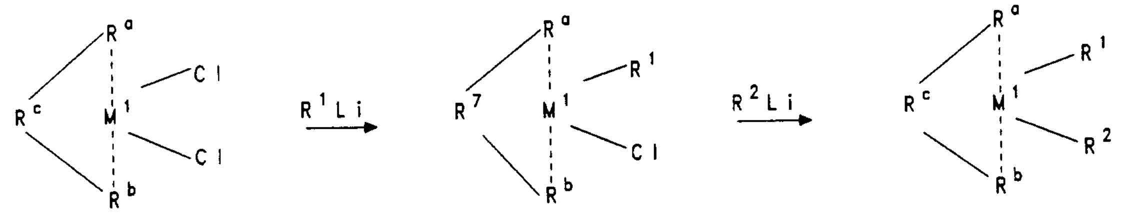

Die eingesetzten Metallocenverbindungen sind Bis-indenyl- bis-dimethylsilyl, hafniumdichlorid (= 1) und Bis-indenyl-bis-dimethylsilylzirkondichlorid (= 2).

Der Aktivator ist ein Aluminoxan der Formel (I)

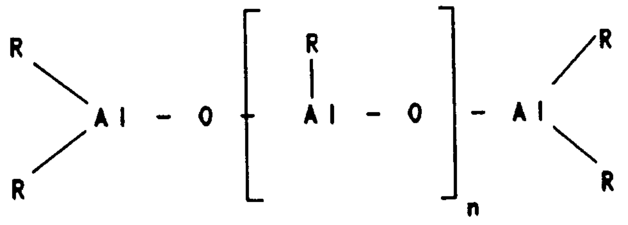

(I)

für den linearen Typ und/oder der Formel (II)

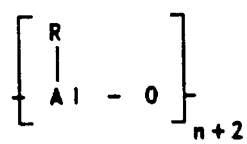

(II)

für den cyclischen Typ. In diesen Formeln bedeuten R eine $C_1$-$C_6$-Alkylgruppe, vorzugsweise Methyl, Ethyl oder Isobutyl, insbesondere Methyl, und n eine ganze Zahl von 2 bis 50, bevorzugt 10 bis 40. Die exakte Struktur des Aluminoxans ist jedoch nicht gesichert, die Formeln I und II sind daher nur Näherungsformeln.

Das Aluminoxan kann auf verschiedene Art und Weise hergestellt werden.

Eine Möglichkeit ist die vorsichtige Zugabe von Wasser zu einer verdünnten Lösung eines Aluminiumtrialkyls, indem die Lösung des Aluminiumtrialkyls und das Wasser jeweils in kleinen Portionen in eine vorgelegte größere Menge eines inerten Lösemittels eingetragen werden und zwischendurch das Ende der Gasentwicklung jeweils abgewartet wird.

Bei einem anderen Verfahren wird fein gepulvertes Kupfersulfatpentahydrat in Toluol aufgeschlämmt und in einem Glaskolben unter Inertgas bei etwa -20 °C mit soviel Aluminiumtrialkyl versetzt, daß für je 4 Al-Atome etwa 1 mol $CuSO_4 \cdot 5H_2O$ zur Verfügung steht. Nach langsamer Hydrolyse unter Alkan-Abspaltung wird die ßeaktionsmischung 24 bis 48 Stunden bei Zimmertemperatur belassen, wobei gegebenenfalls gekühlt werden muß, damit die Temperatur nicht über 30 °C ansteigt. Anschließend wird das im Toluol gelöste Aluminoxan von dem Kupfersulfat abfiltriert und die Lösung unter Vakuum eingeengt. Es wird angenommen, daß bei diesem Herstellungsverfahren die niedermolekularen Aluminoxane unter Abspaltung von Aluminiumtrialkyl zu höheren Oligomeren kondensieren.

Weiterhin erhält man Aluminoxane, wenn man bei einer Temperatur von -20 bis 100 °C in einem inerten aliphatischen oder aromatischen Lösemittel, vorzugsweise Heptan oder Toluol, gelöstes Aluminiumtrialkyl, vorzugsweise Aluminiumtrimethyl, mit kristallwasserhaltigen Aluminiumsalzen, vorzugsweise Aluminiumsulfat, zur Reaktion bringt. Dabei beträgt das Volumenverhältnis zwischen Lösemittel und dem verwendeten Aluminiumalkyl 1:1 bis 50:1 - vorzugsweise 5:1 - und die Reaktionszeit, die durch Abspaltung des Alkans kontrolliert werden kann, 1 bis 200 Stunden - vorzugsweise 10 bis 40 Stunden.

Von den kristallwasserhaltigen Aluminiumsalzen werden insbesondere jene verwendet, die einen hohen Gehalt an Kristallwasser aufweisen. Besonders bevorzugt ist Aluminiumsulfat-Hydrat, vor allem die Verbindungen $Al_2(SO_4)_3.16H_2O$ und $Al_2(SO_4)_3.18K_2O$ mit dem besonders hohen Kristallwassergehalt von 16 bzw. 18 mol $H_2O$/mol $Al_2(SO_4)_3$.

Eine weitere Variante zur Herstellung von Aluminoxanen besteht darin, Aluminiumtrialkyl, vorzugsweise Aluminiumtrimethyl, in dem im Polymerisationskessel vorgelegten Suspensionsmittel, vorzugsweise im flüssigen Monomeren, in Heptan oder Toluol, zu lösen und dann die Aluminiumverbindung mit Wasser umzusetzen.

Neben den zuvor geschilderten Verfahren zur Herstellung von Aluminoxanen gibt es weitere, welche brauchbar sind.

Es ist möglich, das Metallocen vor dem Einsatz in der Polymerisationsreaktion mit einem Aluminoxan der Formel (I) und/oder (II) vorzuaktivieren. Dadurch wird die Polymerisationsaktivität deutlich erhöht.

Die Voraktivierung der Übergangsmetallverbindung wird in Lösung vorgenommen. Bevorzugt wird dabei das Metallocen in einer Lösung des Aluminoxans in einem inerten Kohlenwasserstoff aufgelöst. Als inerter Kohlenwasserstoff eignet sich ein aliphatischer oder aromatischer Kohlenwasserstoff. Bevorzugt wird Toluol verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösung. Das Metallocen kann in der gleichen Konzentration eingesetzt werden, vorzugsweise wird es jedoch in einer Menge von $10^{-4}$-1 mol pro mol Aluminoxan eingesetzt. Die Voraktivierungszeit beträgt 5 Minuten bis 60 Stunden, vorzugsweise 5 bis 60 Minuten. Man arbeitet bei einer Temperatur von -78 °C bis 100 °C, vorzugsweise 0 bis 70 °C.

Der erfindungsgemäß zu verwendende Katalysator wird zur Polymerisation von 1-Olefinen der Formel R-CH $=CH_2$, in der R einen Alkylrest mit 1 bis 28 C-Atomen, vorzugsweise 1 bis 10 C-Atomen, insbesondere einem C-Atom bedeutet, eingesetzt, beispielsweise Propylen, Buten-(1), Hexen-(1), 4-Methylpenten-(1), Octen-(1). Besonders bevorzugt ist Propylen.

Die Polymerisation wird in bekannter Weise in Lösung, in Suspension oder in der Gasphase, kontinuierlich oder diskontinuierlich, ein- oder mehrstufig bei einer Temperatur von -60 bis 100 °C, vorzugsweise 0 bis 80 durchgeführt. Der Druck beträgt 0,5 bis 100 bar. Bevorzugtist die Polymerisation in dem technisch besonders interessanten Druckbereich von 5 bis 60 bar.

Dabei wird die Metallocenverbindung in einer Konzentration, bezogen auf das Übergangsmetall, von $10^{-3}$ bis $10^{-7}$, vorzugsweise $10^{-4}$ bis $10^{-6}$ mol Übergangsmetall pro $dm^3$ Lösemittel bzw. pro $dm^3$ Reaktorvolumen angewendet. Das Aluminoxan wird in einer Konzentration von $10^{-4}$ bis $10^{-1}$ mol, vorzugsweise $10^{-3}$ bis $10^{-2}$ mol pro $dm^3$ Lösemittel bzw. pro $dm^3$ Reaktorvolumen verwendet. Prinzipiell sind aber auch höhere Konzentrationen möglich.

Wenn die Polymerisation als Suspensions- oder Lösungspolymerisation durchgeführt wird, wird ein für das Ziegler-Niederdruckverfahren gebräuchliches inertes Lösemittel verwendet. Beispielsweise arbeitet man in einem aliphatischen oder cycloaliphatischen Kohlenwasserstoff; als solcher sei beispielsweise Butan, Pentan, Hexan, Heptan, Isooctan, Cyclohexan, Methylcyclohexan genannt. Weiterhin kann eine Benzin- bzw. hydrierte Dieselölfraktion, die sorgfältig von Sauerstoff, Schwefelverbindungen und Feuchtigkeit befreit worden ist, benutzt werden. Brauchbar ist auch Toluol. Bevorzugt wird das zu polymerisierende Monomere als Lösemittel oder Suspensionsmittel eingesetzt. Die Molmasse des Polymerisats kann in bekannter Weise geregelt werden; vorzugsweise wird dazu Wasserstoff verwendet. Die Dauer der Polymerisation ist beliebig, da das erfindungsgemäß zu verwendende Katalysatorsystem einen nur geringen zeitabhängigen Abfall der Polymerisationsaktivität zeigt.

Das erfindungsgemäße Verfahren zeichnet sich dadurch aus, daß die Zirkon- und Hafnium-Verbindungen sehr temperaturstabil sind, so daß sie auch bei Temperaturen bis 90 °C eingesetzt werden können. Außerdem können die als Cokatalysatoren dienenden Aluminoxane in geringerer Konzentration als bisher zugesetzt werden. Schließlich ist es nunmehr möglich,Isoblockpolymere bei technisch interessanten Temperaturen herzustellen.

Die nachfolgenden Beispiele sollen die Erfindung erläutern.

Es bedeuten

| | |
|---|---|
| VZ = | Viskositätszahl in $cm^3/g$, |
| Mw = | Molmassengewichtsmittel in g/mol, |
| Mw/Mn = | Polydispersität ermittelt durch Gelpermeationschromatographie (GPC) und |
| II = | Isotaktischer Index, bestimmt durch $^{13}C$-NMR-Spektroskopie |
| $n_{iso}$ = | mittlere Länge der isotaktischen Sequenzen. |

Isoblockpolymere können NMR-spektroskopisch mit Hilfe einer Triadenanalyse nachgewiesen und von anderen 1-Olefinpolymeren unterschieden werden (vgl. A. Zambelli et al., Macromolecules 8, 687-689 (1975)). Für Isoblockpolymere ist die Markoff-Statistik gültig, wenn die nachfolgende Gleichung erfüllt ist

$$2(rr)/(mr) = 1$$

Der Ethylengehalt wurde NMR- und IR-spektroskopisch ermittelt.

Beispiel 1

Ein trockener 16 $dm^3$ Kessel wurde mit Stickstoff gespült und mit 10 $dm^3$ flüssigem Propylen befüllt. Dann wurden 40 $cm^3$ toluolische Methylaluminoxanlösung
(= MAO, entsprechend 26,8 mmol Al, mittlerer Oligomerisierungsgrad n = 30) zugegeben und der Ansatz bei 30 °C 15 Minuten gerührt.

Parallel dazu wurden 47,9 mg (0,088 mmol) Bis-indenyl-bis-dimethylsilylzirkondichlorid in 20 $cm^3$ MAO (= 13,4 mmol Al) gelöst und durch 15 minütiges Stehenlassen voraktiviert.

Die Lösung wurde dann in den Kessel gegeben. Das Polymerisationssystem wurde auf eine Temperatur von 70 °C gebracht und dann 5 Stunden bei dieser Temperatur gehalten.

Es wurden 1,62 kg Isoblockpolymer erhalten. Die Aktivität des Metallocens betrug somit 6,8 kg Polymer/g Metallocen/h.

Am Polymeren wurden die folgenden analytischen Daten ermittelt:
VZ = 14 $cm^3$/g, Mw = 9000 g/mol, $M_n$ = 4750 g/mol, $M_w/M_n$ = 1,9, II = 73,6 %, $n_{iso}$ = 5,8, c $(-(CH_2)_4-)$ = 4,71 mol.

Beispiel 2

Es wurde analog Beispiel 1 verfahren. Als Polymerisationstemperatur wurde jedoch 60 °C gewählt. Die Polymerisationsdauer betrug 5 Stunden. Es wurden 100,0 mg Metallocenverbindung eingesetzt.
0,87 kg Isoblockpolymer wurden erhalten. Die Aktivität des Metallocens betrug somit 1,7 kg Polymer/g Metallocen/h. Am Polymeren wurden die folgenden analytischen Daten ermittelt:
VZ = 17 $cm^3$/g, $M_w$ = 10200 g/mol, $M_n$ = 5700 g/mol, $M_w/M_n$ = 1,8, II = 74,3 %, $n_{iso}$ = 6,0, c $(-(CH_2)_4-)$ = 3,65 mol-%.

Beispiel 3

Es wurde analog Beispiel 1 verfahren. Als Polymerisationstemperatur wurde jedoch 50 °C gewählt. Die Polymerisationsdauer betrug 25 Stunden. 54,8 mg Metallocenverbindung wurden in der entsprechenden Menge MAO eingesetzt. Es wurden 0,46 kg Isoblockpolymer erhalten. Die Aktivität des Metallocens betrug somit 1,67 kg Polymer/g Metallocen/h.
Am Polymeren wurden die folgenden analytischen Daten ermittelt:
VZ = 21 $cm^3$/g, $M_w$ = 11900 g/mol, $M_n$ = 6300 g/mol, $M_w/M_n$ = 1,9, II = 75,1 %, $n_{iso}$ = 6,4, c $(-CH_2)_4-)$ = 2,71 mol-%.

Beispiel 4

Verfahren wurde analog Beispiel 1. Als Polymerisationstemperatur wurde jedoch 40 °C gewählt. Die Polymerisationsdauer betrug 5 Stunden. Es wurden 44,7 mg Metallocenverbindung eingesetzt. 0,14 kg Isoblockpolymer wurden erhalten. Die Aktivität des Metallocens betrug somit 0,63 kg Polymer/g Metallocen/h.
Am Polymeren wurden die folgenden analytischen Daten ermittelt:
VZ = 9 $cm^3$/g, $M_w$ = 12400 g/mol, $M_n$ = 6200 g/mol, $M_w/M_n$ = 2,0, II = 76,4 %, $n_{iso}$ = 6,5; c $(-(CH_2)_4-)$ = 1,4 mol-%.

Beispiel 5

Es wurde analog Beispiel 1 verfahren. Als Polymerisationstemperatur wurde jedoch 10 °C gewählt. Die Polymerisationsdauer betrug 12 Stunden. Eingesetzt wurden 180,0 mg Metalocenverbindung. 0,17 kg Isoblockpolymer wurden erhalten. Die Aktivität des Metallocens betrug 0,08 kg Polymer/g Metallocen/h.
Am Polymeren wurden die folgenden analytischen Daten ermittelt:
VZ = 58 $cm^3$/g, $M_w$ = 48600 g/mol, $M_n$ = 23800 g/mol, $M_w/M_n$ = 2,0, II = 81,0 %, $n_{iso}$ = 8,4, $C(-(CH_2)_4-)$ = 0,5 mol-%.

Beispiel 6

Es wurde analog Beispiel 1 verfahren. Als Metallocenverbindung wurde aber 5,0 mg (= 0,013 mmol) Bis-indenyl-bis-dimethylsilyl-hafniumdichlorid gewählt (das Metallocen wurde in 20 $cm^3$ MAO (= 13,4 mmol Al) gelöst, zum flüssigen Propylen wurden 40 $cm^3$ MA0 (= 26,8 mmol Al) gegeben).

Das Polymerisationssystem wurde auf eine Temperatur von 60 °C gebracht und dann 5 Stunden bei dieser Temperatur gehalten. Es wurden 0,73 kg Isoblockpolymer erhalten. Die Aktivität des Metallocens betrug somit 6,75 kg Polymer/g Metallocen/h.

Am Polymeren wurden die folgenden analytischen Daten ermittelt:

VZ = 59 $cm^3$/g, II = 77,5 % $n_{iso}$ = 7,1, c ($-(CH_2)_4$) = 2,38 mol-%.

Vergleichsbeispiel

In einem zu Beispiel 1 analogen Versuch wurde mit rac-Bisindenyldimethylsilyl-zirkondichlorid ein Polymer mit der VZ von 43,5 $cm^3$/g, einem $M_w$ von 35200 g/mol und einem $M_w/M_n$ von 2,5 erhalten. Der isotaktische Index betrug 96,6 %, die isotaktische Sequenzlänge wurde zu 51 bestimmt.

## Patentansprüche

### Patentansprüche für folgende Vertragsstaaten : BE, DE, FR, GB, IT, NL

1. Isoblockpolymer des Propylens mit Molekülketten, bestehend aus isotaktischen Sequenzen mit einer Sequenzlänge von 3 bis 50 Monomereinheiten, welche durch jeweils eine Monomereinheit mit entgegengesetzter Konfiguration voneinander getrennt sind, und 0,5 bis 10 mol-%, bezogen auf das Gesamtpolymer, statistisch verteilter Ethyleneinheiten.

2. Verfahren zur Herstellung des Isoblockpolymeren nach Anspruch 1 durch Polymerisation von Propylen bei einer Temperatur von -60 bis 100 °C, einem Druck von 0,5 bis 100 bar, in Lösung, in Suspension oder in der Gasphase, in Gegenwart eines Katalysators, welcher aus einem Metallocen und einem Aluminoxan besteht, dadurch gekennzeichnet, daß als Metallocen Bis-indenyl-bis-dimethylsilyl-hafniumdichlorid oder Bis-indenyl-bis-dimethylsilylzirkondichlorid verwendet wird.

3. Verwendung des Isoblockpolymers nach Anspruch 1 zur Herstellung von Polymermischungen.

4. Verwendung nach Anspruch 3 zur Herstellung von Polypropylenblends.

### Patentansprüche für folgenden Vertragsstaat : ES

1. Verfahren zur Herstellung eines Isoblockpolymeren des Propylens mit Molekülketten, bestehend aus isotaktischen Sequenzen mit einer Sequenzlänge von 3 bis 50 Monomereinheiten, welche durch jeweils eine Monomereinheit mit entgegengesetzter Konfiguration voneinander getrennt sind, und 0,5 bis 10 mol-%, bezogen auf das Gesamtpolymer, statistisch verteilter Ethyleneinheiten, durch Polymerisation von Propylen bei einer Temperatur von -60 bis 100 °C, einem Druck von 0,5 bis 100 bar, in Lösung, in Suspension oder in der Gasphase, in Gegenwart eines Katalysators, welcher aus einem Metallocen und einem Aluminoxan besteht, dadurch gekennzeichnet, daß als Metallocen Bis-indenyl-bis-dimethylsilyl-hafniumdichlorid oder Bis-indenyl-bis-dimethylsilyl-zirkondichlorid verwendet wird.

2. Verwendung des Isoblockpolymers, herstellbar nach Anspruch 1, zur Herstellung von Polymermischungen.

3. Verwendung nach Anspruch 2 zur Herstellung von Polypropylenblends.

## Claims

### Claims for the following Contracting States : BE, DE, FR, GB, IT, NL

1. An isoblock polymer of propylene with molecular chains comprising isotactic sequences with a sequence length of 3 to 50 monomer units, which are separated from one another in each case by one monomer unit of opposite configuration, and 0.5 to 10 mol%, based on the total polymer, of randomly distributed ethylene units.

2. A process for the preparation of the isoblock polymer as claimed in claim 1 by the polymerization of propylene at a temperature of -60 to 100°C and a pressure of 0.5 to 100 bar, in solution, in suspension or in the gas phase, in the presence of a catalyst comprising a metallocene and an aluminoxane, the metallocene used being bis(indenyl)bis(dimethylsilyl)hafnium dichloride or bis(indenyl)bis(dimethylsilyl)-zirconium dichloride.

3. The use of an isoblock polymer as claimed in claim 1 for the preparation of polymer mixtures.

4. The use as claimed in claim 3 for the preparation of polypropylene blends.

**Claims for the following Contracting State : ES**

1. A process for the preparation of an isoblock polymer of propylene with molecular chains comprising isotactic sequences with a sequence length of 3 to 50 monomer units, which are separated from one another in each case by one monomer unit of opposite configuration, and 0.5 to 10 mol%, based on the total polymer, of randomly distributed ethylene units, by polymerization of propylene at a temperature of -60 to 100°C and a pressure of 0.5 to 100 bar, in solution, in suspension or in the gas phase, in the presence of a catalyst which comprises a metallocene and an aluminoxane, the metallocene used being bis(indenyl)bis(dimethylsilyl)hafnium dichloride or bis(indenyl)bis(dimethylsilyl)zirconium dichloride.

2. The use of an isoblock polymer as claimed in claim 1 for the preparation of polymer mixtures.

3. The use as claimed in claim 5 for the preparation of polypropylene blends.

**Revendications**
**Revendications pour les Etats contractants suivants : BE, DE, FR, GB, IT, NL**

1. Isocopolymère séquencé du propylène comportant des chaînes moléculaires constituées de séquences isotactiques ayant une longueur de séquence de 3 à 50 motifs monomères, qui sont séparées les unes des autres par un motif monomère ayant une configuration opposée, et de 0,5 à 10 % en moles, par rapport au polymère total, de motifs éthylène à répartition statistique.

2. Procédé pour préparer l'isocopolymère séquencé selon la revendication 1 par polymérisation du propylène, à une température de -60 à 100°C, sous une pression de 0,5 à 100 bar, en solution, en suspension ou en phase gazeuse, en présence d'un catalyseur constitué d'un métallocène et d'un aluminoxane, caractérisé en ce qu'on utilise comme métallocène le dichlorure de bis-indényl-bis-diméthylsilylhafnium ou le dichlorure de bis-indényl-bis-diméthylsilylzirconium.

3. Utilisation de l'isocopolymère séquencé selon la revendication 1 pour préparer des mélanges de polymères.

4. Utilisation selon la revendication 3, pour préparer des mélanges de polypropylène.

**Revendications pour l'Etat contractant suivant : ES**

1. Procédé pour préparer un isocopolymère séquencé du propylène comportant des chaînes moléculaires constituées de séquences isotactiques ayant une longueur de séquence de 3 à 50 motifs monomères, qui sont séparées les unes des autres par un motif monomère ayant une configuration opposée, et de 0,5 à 10 % en moles, par rapport au polymère total, de motifs éthylène à répartition statistique, par polymérisation de propylène, à une température de -60 à 100°C, sous une pression de 0,5 à 100 bar, en solution, en suspension ou en phase gazeuse, en présence d'un catalyseur constitué d'un métallocène et d'un aluminoxane, caractérisé en ce qu'on utilise comme métallocène du dichlorure de bis-indényl-bis-diméthylsilylhafnium ou du dichlorure de bis-indényl-bis-diméthylsilylzirconium.

2. Utilisation de l'isocopolymère séquencé pouvant être préparé selon la revendication 1, pour préparer des mélanges de polymères.

3. Utilisation selon la revendication 2, pour préparer des mélanges de polypropylène.